(19) Europäisches Patentamt
European Patent Office
Office européen des brevets

(11) **EP 3 316 550 A1**

(12) **EUROPEAN PATENT APPLICATION**

(43) Date of publication:
**02.05.2018 Bulletin 2018/18**

(51) Int Cl.:
***H04L 29/06*** (2006.01)   ***H04L 29/08*** (2006.01)

(21) Application number: **17198858.7**

(22) Date of filing: **27.10.2017**

| | |
|---|---|
| (84) Designated Contracting States:<br>**AL AT BE BG CH CY CZ DE DK EE ES FI FR GB**<br>**GR HR HU IE IS IT LI LT LU LV MC MK MT NL NO**<br>**PL PT RO RS SE SI SK SM TR**<br>Designated Extension States:<br>**BA ME**<br>Designated Validation States:<br>**MA MD**<br><br>(30) Priority: **31.10.2016 JP 2016212472**<br><br>(71) Applicant: **FUJITSU LIMITED**<br>**Kanagawa 211-8588 (JP)** | (72) Inventors:<br>• **Saito, Satomi**<br>**Kanagawa 211-8588 (JP)**<br>• **Torii, Satoru**<br>**Kanagawa 211-8588 (JP)**<br><br>(74) Representative: **Hoffmann Eitle**<br>**Patent- und Rechtsanwälte PartmbB**<br>**Arabellastraße 30**<br>**81925 München (DE)** |

(54) **NETWORK MONITORING DEVICE AND METHOD**

(57)   A network monitoring device includes: a memory; and a processor coupled to the memory and configured to: based on identifying information and attribute information of an access source included in a history of access to plural dummy servers installed in a monitoring target network, the access source having accessed the individual dummy servers, tally a number of the dummy servers accessed and a number of types of the attribute information for each access source; and estimate the legitimacy of individual access sources based on the number of dummy servers and the number of attribute information types tallied for each access source.

FIG.1

**Description**

FIELD

The present disclosure relates to a network monitoring device, a non-transitory computer readable recording medium that stores network monitoring program, and a network monitoring method.

BACKGROUND

A first technology has been proposed that employs a dummy server, and that analyzes operation of malware in an isolated environment provided with a malware execution terminal, the dummy server, and a log analysis terminal. The first technology causes malware to execute on the malware execution terminal, and collects API call logs using a mechanism in which, in a case in which an API call is made by the malware, the malware execution terminal calls a function prepared for the purpose of log collection rather than the actual function. Further, in a case in whih the malware requests access to a server, the first technology collects server access logs by transmitting the requests to the dummy server rather than to the actual server. Then the first technology transmits the collected logs to a log analysis terminal, takes only needed logs by referencing a log definition file, and extracts behavior by referencing a behavior definition file.

Related Documents

*Patent Documents*

Patent Document 1: Japanese Patent Application Laid-Open (JP-A) No. 2007-334536 Server administration generally includes monitoring for illicit access made with intent to attack, registering the access source that performed the illicit access in a blacklist, and blocking access to the server from illicit access sources registered in the blacklist. However, in addition to direct access to the server from the client, a method in which access to the server from the client is made via a proxy server is another method of accessing a server from a client. When access is made via a proxy server, even when the server has been accessed from plural clients via a single proxy server, from the server side it appears that the single proxy server is the access source of all accesses from the plural clients.

Further, proxy servers include a mixture of legitimate proxy servers employed by legitimate clients with no intent to attack and illicit proxy servers employed by illicit clients who access with intent to attack. A legitimate proxy server is, for example, installed in an organization such as a corporation, and controls access to a network outside the organization from a legitimate client inside the organization. On the other hand, an illicit proxy server is employed by the illicit client accessing with intent to attack for the purpose of concealing the real access source from the server side.

However, illicit access may also occur via legitimate proxy servers. For example, if a client within an organization is infected with malware or the like, the client operates as a client that performs illicit access and there is a likelihood of illicit access being made via the legitimate proxy server. In such cases, recognizing the legitimate proxy server as an illicit access source and registering the legitimate proxy server in a blacklist blocks access from legitimate clients managed by the legitimate proxy server.

When facing this issue, the first technology is technology that analyzes operation of malware in an isolated environment, and is not capable of estimating the legitimacy of an access source when illicit accesses are mixed in with accesses from a proxy server.

SUMMARY

An object of the present disclosure is to estimate the legitimacy of an access source even in a case in which illicit accesses are mixed in with accesses from the access source.

In one aspect, plural dummy servers are installed in a monitoring target network. Further, based on identifying information and attribute information of an access source included in a history of access to plural respective dummy servers installed in a monitoring target network, the access source having accessed the individual dummy servers, a number of the dummy servers accessed and a number of types of the attribute information are tallied for each access source. Then, the legitimacy of individual access sources is estimated based on the number of dummy servers and the number of attribute information types tallied for each access source.

The aspect achieves an advantageous effect of enabling the legitimacy of an access source to be estimated even in a case in which illicit accesses are mixed in with accesses from an access source.

BRIEF DESCRIPTION OF DRAWINGS

Fig. 1 is a functional block diagram of a network monitoring device and a server group;

Fig. 2 is a schematic block diagram of a first computer that functions as a network monitoring device and second computers that function as dummy servers;

Fig. 3 is a flowchart of an example of communication history recording processing executed by a dummy server;

Fig. 4 is a timing chart illustrating an example of a sequence of communication between a server and a client;

Fig. 5 is a diagram of tables illustrating an example of communication history information recorded for individual dummy servers;

Fig. 6 is a flowchart of an example of network monitoring processing executed by a network monitoring device;

Fig. 7 is a table illustrating an example of collection results of communication history information from dummy servers;

Fig. 8 is a table illustrating an example of tally result information registered in a table;

Fig. 9 is a flowchart of an example of illicit access source estimation processing according to a first exemplary embodiment;

Fig. 10 is a table illustrating an example of a blacklist;

Fig. 11 is a flowchart of an example of illicit access source estimation processing according to a second exemplary embodiment;

Fig. 12 is a table illustrating an example of a high-concern application list; and

Fig. 13 is a flowchart of an example of illicit access source estimation processing according to a third exemplary embodiment.

DESCRIPTION OF EMBODIMENTS

Exemplary embodiments of technology disclosed herein are described in detail below, with reference to the drawings.

First Exemplary Embodiment

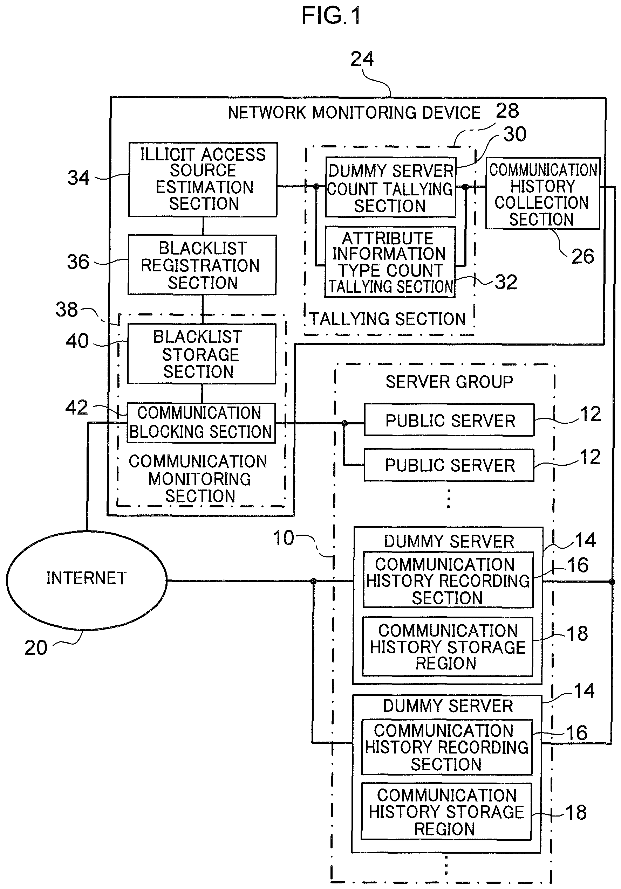

A server group 10 illustrated in Fig. 1 includes plural public servers 12 and plural dummy servers 14. The plural public servers 12 included in the server group 10 are connected to the Internet 20 via a communication monitoring section 38 of a network monitoring device 24, and are allocated different IP addresses to one another within a predetermined IP address range. The individual public servers 12 provide predetermined services, such as a distribution of a webpage, to any access sources (not illustrated in the drawings) that have accessed the server via the Internet 20. Note that the network formed by the plural public servers 12 is an example of a monitoring target network of the present disclosure.

Further, the plural dummy servers 14 included in the server group 10 are connected to the Internet 20 without connecting to the communication monitoring section 38 of the network monitoring device 24. The plural dummy servers 14 are each allocated different IP addresses from each other within the predetermined IP address range (IP addresses that are also different from those of the plural public servers 12). Accordingly, the plural dummy servers 14 are each installed in the monitoring target network formed by the plural public servers 12. Further, the plural dummy servers 14 form a network monitoring system together with the network monitoring device 24.

Each of the plural dummy servers 14 includes a communication history recording section 16 and a communication history storage region 18. The communication history recording section 16 of each dummy server 14 registers communication history information in the communication history storage region 18 each time the dummy server 14 is accessed via the Internet 20 from any access source. The communication history information includes an access time (timing), identifying information of the access source, and attribute information of the access source. One example of the identifying information of the access source is the IP address of the access source. Examples of the attribute information of the access source are identifying information of an application used to access the dummy servers 14 and information regarding a key exchange algorithm that is usable to access the dummy servers 14, given notiifcation from the access source.

The network monitoring device 24 includes a communication history collection section 26, a tallying section 28, an illicit access source estimation section 34, a blacklist registration section 36, and a communication monitoring section 38. The tallying section 28 includes a dummy server count tallying section 30 and an attribute information type count tallying section 32. The communication monitoring section 38 includes a blacklist storage section 40 and a communication blocking section 42. Note that the tallying section 28 is an example of a tallying section and the illicit access source estimation section 34 is an example of an estimation section.

The communication history collection section 26 is connected to each of the plural dummy servers 14 and collects, from each of the individual dummy servers 14, communication history information recorded in the communication history storage region 18 of each individual dummy server 14.

The dummy server count tallying section 30 and the attribute information type count tallying section 32 of the tallying section 28 are each connected to the communication history collection section 26. The dummy server count tallying section 30 tallies, from the communication history information collected by the communication history collection section 26, the number of dummy servers 14 that have been accessed by individual access sources, for each access source. The attribute information type count tallying section 32 tallies the number of types of attribute information from the communication history information collected by the communication history collection section 26, for each access source. Examples of the number of types of attribute information are the number of types of application used to access the dummy servers 14 and the number of types of key exchange algorithms that are usable to access the dummy server 14, given notification from the access source.

The illicit access source estimation section 34 is connected to both the dummy server count tallying section 30 and the attribute information type count tallying section 32 of the tallying section 28. The illicit access source estimation section 34 estimates the legitimacy of individual access sources, namely, whether or not the access source is an illicit access source, based on the number of dummy servers 14 tallied by the dummy server count tallying section 30 and the number of types of attribute information tallied by the attribute information type count tallying section 32.

The blacklist registration section 36 is respectively connected to the illicit access source estimation section 34 and the blacklist storage section 40 of the communication monitoring section 38. The blacklist registration section 36 additionally registers to the blacklist stored in the blacklist storage section 40, access sources estimated to not be legitimate by the illicit access source estimation section 34, namely illicit access source information.

The communication blocking section 42 is connected to the blacklist storage section 40. The communication blocking section 42 estimates whether or not access sources that have accessed the public servers 12 via the Internet 20 are access sources having information registered in the blacklist stored in the blacklist storage section 40. The communication blocking section 42 then blocks access to the public servers 12 from access sources that have information registered in the blacklist. Note that the communication blocking section 42 is an example of an access blocking section of the present disclosure.

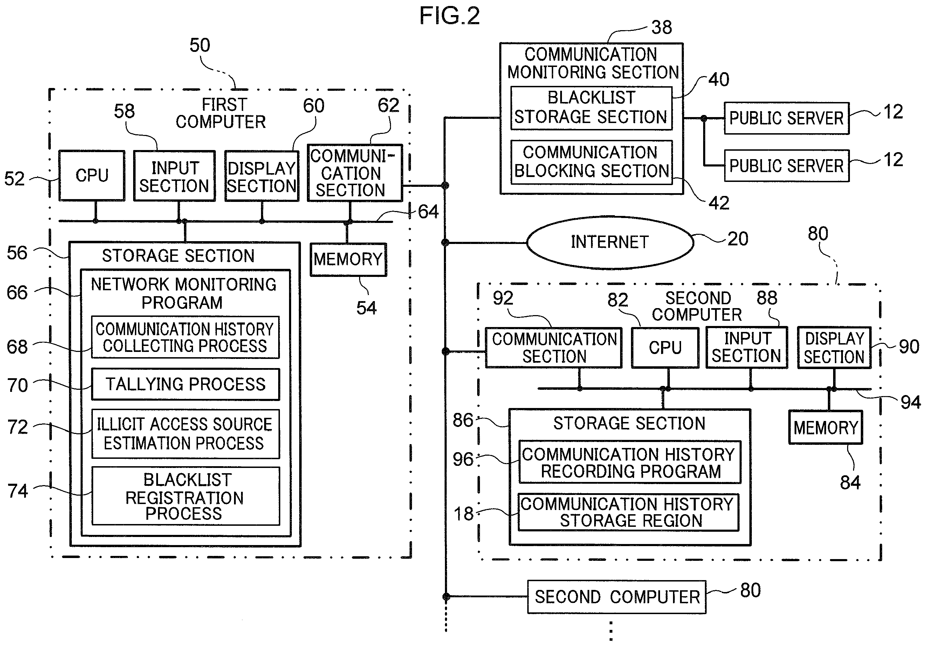

In the network monitoring device 24, sections other than the communication monitoring section 38 may be implemented by a first computer 50 illustrated in Fig. 2. The first computer 50 includes a CPU 52, memory 54 serving as a temporary storage region, a non-volatile storage section 56, an input section 58 such as a keyboard, a display section 60 such as a display, and a communication section 62. The CPU 52, the memory 54, the storage section 56, the input section 58, the display section 60, and the communication section 62 are connected to one another via a bus 64. Further, the communication section 62 is connected to the communication monitoring section 38, the Internet 20, and plural second computers 80 each functioning as a dummy server 14, via a communication line.

The storage section 56 is implemented by a hard disk drive (HDD), a solid state drive (SSD), flash memory, or the like. A network monitoring program 66 that causes the first computer 50 to function as sections of the network monitoring device 24 other than the communication monitoring section 38 is stored in the storage section 56. The CPU 52 reads the network monitoring program 66 from the storage section 56, loads the network monitoring program 66 onto the memory 54, and sequentially executes the processes included in the network monitoring program 66.

The network monitoring program 66 includes a communication history collecting process 68, a tallying process 70, an illicit access source estimation process 72, and a blacklist registration process 74. The CPU 52 operates as the communication history collection section 26 illustrated in Fig. 1 by executing the communication history collecting process 68. Further, the CPU 52 operates as the tallying section 28 illustrated in Fig. 1 by executing the tallying process 70. Further, the CPU 52 operates as the illicit access source estimation section 34 illustrated in Fig. 1 by executing the illicit access source estimation process 72. Further, the CPU 52 operates as the blacklist registration section 36 illustrated in Fig. 1 by executing the blacklist registration process 74. The first computer 50, which executes the network monitoring program 66, thereby functions as the sections of the network monitoring device 24 other than the communication monitoring section 38, and the network monitoring device 24 is accordingly implemented by the first computer 50 and the communication monitoring section 38.

Further, the respective dummy servers 14 may be implemented by the second computers 80, configured as illustrated in Fig. 2. Each second computer 80 includes a CPU 82, memory 84 serving as a temporary storage region, a non-volatile storage section 86, an input section 88 such as a keyboard, a display section 90 such as a display, and a communication section 92. The CPU 82, the memory 84, the storage section 86, the input section 88, the display section 90, and the communication section 92 are connected to one another via a bus 94. Further, the communication section 92 is connected to the communication monitoring section 38, the Internet 20, and the first computer 50 via a communication line.

The storage section 86 is implemented by an HDD, an SSD, flash memory, or the like. A communication history recording program 96 that causes the second computer 80 to function as the communication history recording section 16 illustrated in Fig. 1 is stored in the storage section 86, and the communication history storage region 18 is provided in the storage section 86. The CPU 82 reads the communication history recording program 96 from the storage section 86, loads the communication history recording program 96 onto the memory 84, and sequentially executes the communication history recording program 96. The second computer 80, which executes the communication history recording program 96, thereby functions as the dummy server 14.

Next, operation of the first exemplary embodiment is described. Unlike the public servers 12, the dummy servers 14 are servers whose existence is not public. Accordingly, access to the dummy servers 14 will not occur for legitimate clients using services provided by the network that includes the plural public servers 12.

However, illicit clients with intent to attack may, for example, repeatedly make illicit access to arbitrary IP addresses in the IP address range of the network with the intention of, for example, discovering servers inside the network that may serve as a foothold for an attack. The IP addresses that are the access targets of the illicit access may be selected at random from the IP address range of the network, or may be selected in sequence from the start of the IP address range. Access to dummy servers 14 will occur in a case in which such illicit access is performed.

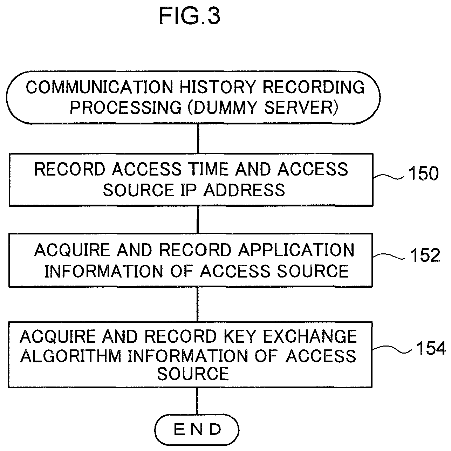

The communication history recording section 16 of a dummy server 14 performs communication history recording processing illustrated in Fig. 3 each time the dummy server 14 (i.e., the local server) is accessed via the Internet 20 from any access source. At step 150 of the communication history recording processing, the communication history recording section 16 records, in the communication history storage region 18, the access time and the access source IP address of the current access to the local server from the access source.

Next, at step 152, the communication history recording section 16 acquires identifying information of the application used in the current access to the local server from the access source, and records the acquired application identifying information in the communication history storage region 18.

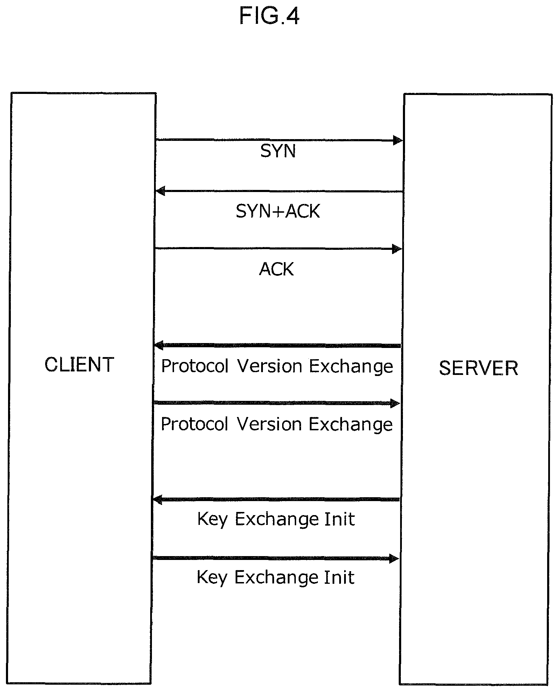

As an example, Fig. 4 illustrates a sequence of communication between the client and the server when communication conforming to the secure shell (SSH) protocol is performed. In this communication sequence, after an ACKnowledgement (ACK) transmitted from the client is received by the server, transition is made to a protocol version exchange phase, and protocol version exchanges are exchanged between the client and the server. When this is performed, the protocol version exchange transmitted to the server from the client includes a text string representing the version of the protocol and the version of the application. Accordingly, for example, in the communication sequence illustrated in Fig. 4, the communication history recording section 16 may acquire the identifying information of the application by extracting the text string included in the protocol version exchange received from the access source. Note that the protocol for communication between the dummy server 14 and the access source is not limited to the SSH.

At step 154, the communication history recording section 16 acquires the key exchange algorithm information of the access source and records the acquired key exchange algorithm information in the communication history storage region 18. As an example, in the communication sequence illustrated in Fig. 4, transition is made to a key exchange init phase after the protocol version exchange phase described above, and key exchange init is exchanged between the client and the server. When this is performed, information regarding all key exchange algorithms supported by the client is included in the key exchange init transmitted to the server from the client. Accordingly, in the communication sequence illustrated in Fig. 4, the communication history recording section 16 may, for example, acquire the key exchange algorithm information by extracting the key exchange algorithm information included in the key exchange init received from the access source. At step 154, the communication history recording processing ends after the key exchange algorithm information is recorded in the communication history storage region 18.

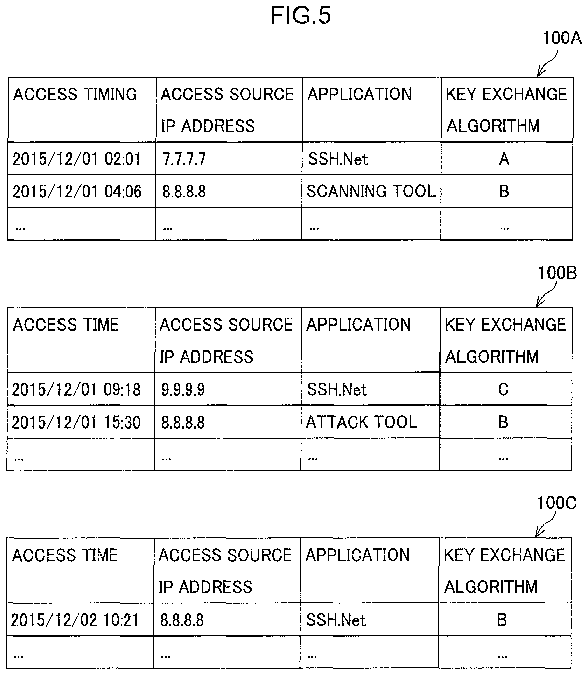

The plural dummy servers 14 installed in the monitoring target network perform the communication history recording processing each time the server is accessed via the Internet 20 from any access source. Accordingly, different communication history information is respectively stored in the communication history storage region 18 of each dummy server 14, as in the communication history information 100A, 100B, and 100C illustrated in Fig. 5 as an example.

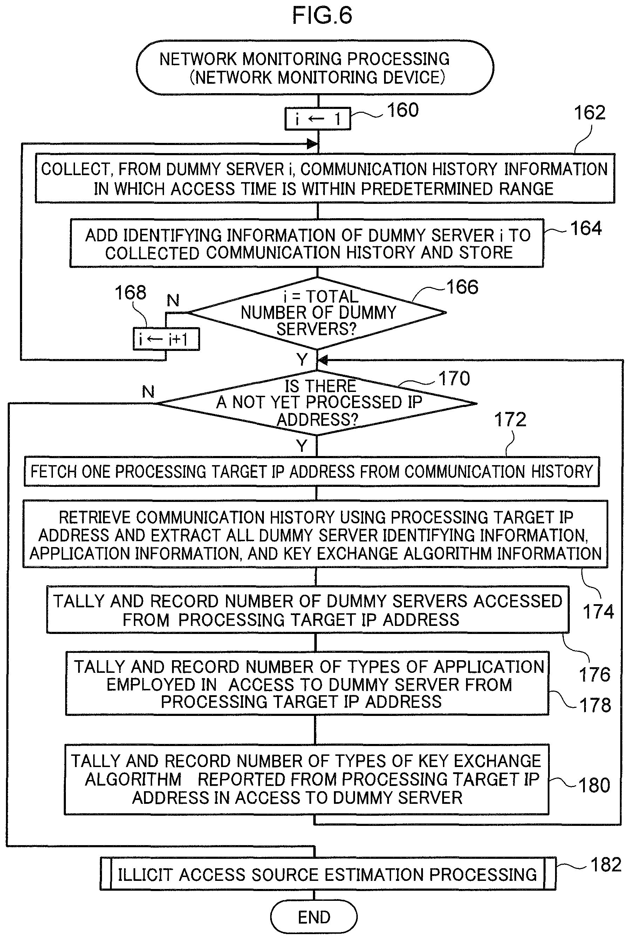

Next, network monitoring processing periodically executed by the network monitoring device 24 is described, with reference to Fig. 6. Note that the execution time interval for network monitoring processing may, for example, be pre-set in accordance with the scale of the monitoring target network, the number of installed dummy servers 14, the level of security set for the monitoring target network, and the like. Further, the execution time interval for the network monitoring processing may be changed in response to changes in the number of accesses (i.e., access frequency) to the dummy servers 14.

At step 160 of the network monitoring processing, the communication history collection section 26 sets a variable i to 1, the variable i being for identifying an individual dummy server 14. At step 162, the communication history collection section 26 collects, from the ith dummy server 14, communication history information in which the access time is within in a predetermined time range, from the communication history information recorded in the communication history storage region 18. Note that a range spanning from the time at which the network monitoring processing has been previously executed until the current time, for example, may be applied as the predetermined time range.

At step 164, the communication history collection section 26 adds the identifying information of the ith dummy server 14 to the communication history information collected at step 162 and stores the communication history information to which the identifying information of the dummy server 14 has been added in a collection result table. Next, at step 166, the communication history collection section 26 determines whether or not the value of the variable i has reached the total number of dummy servers 14. In cases in which the determination of step 166 is negative, processing transitions to step 168, and at step 168, the communication history collection section 26 increments the variable i by 1 and returns to step 162.

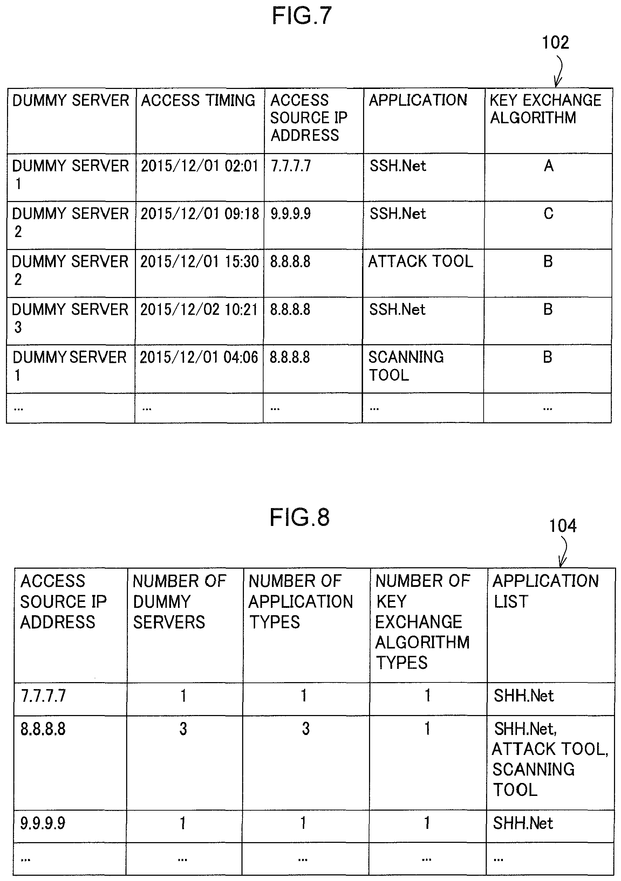

Accordingly, steps 162 to 168 are repeated until the determination of step 166 is affirmative, such that communication history information from the individual dummy servers 14 is sequentially collected and respectively stored in the collection result table. Then, at the time when the communication history information has been collected from all of the dummy servers 14 and the determination of step 166 is affirmative, a collection result 102 of the communication history information, as illustrated in Fig. 7 as an example, is stored in the collection result table.

In cases in which the determination of step 166 is affirmative, processing transitions to step 170, and at step 170, the tallying section 28 determines whether or not an IP address for which the processing of next step 172 and the subsequent steps has not yet been executed is present amongst the collection results of the communication history information stored in the collection result table. Processing transitions to step 172 in cases in which the determination of step 170 is affirmative. At step 172, the tallying section 28 takes, as a processing target IP address, one IP address for which the processing of step 172 and the subsequent steps has not yet been executed from the collection results of the communication history information stored in the collection result table.

Next, at step 174, the tallying section 28 retrieves collection results of the communication history information stored in the collection result table using the processing target IP address as a key. The tallying section 28 then extracts all of the dummy server 14 identifying information, application identifying information, and key exchange algorithm information associated with the processing target IP address in the collection result of the communication history information.

At step 176, the dummy server count tallying section 30 of the tallying section 28 counts the number of types of identifying information for dummy servers 14 extracted at step 174, and thereby tallies the number of dummy servers 14 that have been accessed from the access source of the processing target IP address. The dummy server count tallying section 30 then records the tallied number of dummy servers 14 in a tally result table in association with the processing target IP address.

Next, at step 178, the attribute information type count tallying section 32 of the tallying section 28 tallies the number of types of application identifying information extracted at step 174. The result of this tally represents the number of types of application used to access the dummy servers 14 from the access source of the processing target IP address. The attribute information type count tallying section 32 records the tallied number of types of application in the tally result table in association with the processing target IP address. Further, the attribute information type count tallying section 32 also records the application identifying information extracted at step 174 in the tally result table as an application list in association with the processing target IP address.

Further, at step 180, the attribute information type count tallying section 32 of the tallying section 28 tallies the number of types of key exchange algorithm information extracted at step 174. The result of the tally represents the number of types of key exchange algorithm reported from the access source in the access to the dummy servers 14 from the access source of the processing target IP address. The attribute information type count tallying section 32 records the tallied number of types of key exchange algorithm information in the tally result table in association with the processing target IP address.

After the processing of step 180 has been completed, processing returns to step 170 and steps 170 to 180 are repeated until the determination of step 170 is negative. Accordingly, the processing of steps 172 to 180 is performed on each access source that accessed the dummy servers 14, and tally result information 104 such as that illustrated in Fig. 8 as an example is stored in the tally result table.

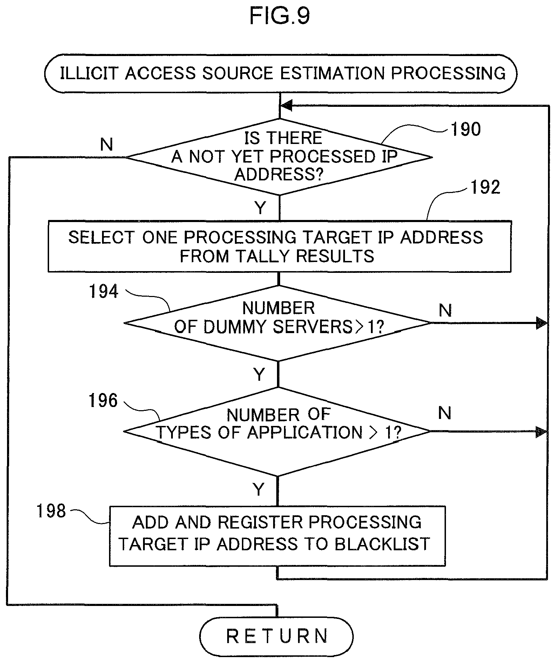

After the processing of steps 172 to 180 has been completed for all of the access sources that accessed the dummy servers 14, the determination of step 170 is negative and processing accordingly transitions to step 182. At step 182, the illicit access source estimation section 34 performs illicit access source estimation processing. The illicit access source estimation processing will be described with reference to Fig. 9.

At step 190 of the illicit access source estimation processing, the illicit access source estimation section 34 determines whether or not an IP address for which the processing of next step 192 and the subsequent steps has not yet been executed is present in the tally result information stored in the tally result table. Processing transitions to step 192 in cases in which the determination of step 190 is affirmative. At step 192, the illicit access source estimation section 34 selects, as the processing target IP address, one IP address for which the processing of step 192 and the subsequent steps has not yet been executed from the tally result information stored in the tally result table.

At step 194, the illicit access source estimation section 34 reads the number of dummy servers 14 stored in the tally result table in association with the processing target IP address selected at step 192 and determines whether or not the read number of dummy servers 14 is greater than 1.

In cases in which the number of accessed dummy servers 14 is 0, the access source of the processing target IP address has not accessed the dummy servers 14 and is therefore highly likely to be a legitimate client or a proxy server that is not managing illicit clients.

However, in cases in which the number of accessed dummy servers 14 is 1, the access source of the processing target IP address has made illicit access to a dummy server 14 and, therefore, the access source has a likelihood of being an illicit client or a proxy server that is managing illicit clients. However, in cases in which the number of accessed dummy servers 14 is 1, the scale of the illicit access from the access source of the processing target IP address is small and the access source of the processing target IP address has a low likelihood of being an illicit proxy server that is managing illicit clients. Accordingly, in cases in which the determination of step 194 is negative, the access source of the processing target IP address is estimated to present a low level of risk and processing returns to step 190.

Further, processing transitions to step 196 in cases in which the determination of step 194 is affirmative. At step 196, the illicit access source estimation section 34 reads the number of types of application stored in the tally result table in association with the processing target IP address and determines whether or not the read number of types of application exceeds 1. Note that the read number of types of application has a value of 1 or greater, since the access source of the processing target IP address has illicitly accessed the dummy server 14.

Here, in cases in which the number of types of application used to access the dummy server 14 from the access source of the processing target IP address is 1, the scale of illicit access from the access source of the processing target IP address is small. The access source therefore has a low likelihood of being an illicit proxy server that is managing plural illicit clients. Accordingly, in cases in which in the determination of step 196 is negative, the access source of the processing target IP address is estimated to present a low level of risk and processing returns to step 190.

However, in cases in which the determinations of steps 194 and 196 are each affirmative, plural types of application have been used to make access to plural dummy servers 14, and the scale of illicit access from the access source of the processing target IP address is therefore not considered small. That is, since the application identifying information includes a text string representing the version of the protocol and the version of the application, there is a high likelihood of this varying between clients. Therefore, the greater the number of types of application, the greater the likelihood of the access source of the processing target IP address being an illicit proxy server managing plural illicit clients.

Accordingly, in cases in which the determination of step 196 is affirmative, the access source of the processing target IP address is estimated to present a high level of risk, and processing transitions to step 198. At step 198, the blacklist registration section 36 registers the processing target IP address as an addition to the blacklist stored in the blacklist storage section 40 of the communication monitoring section 38, and processing returns to step 190.

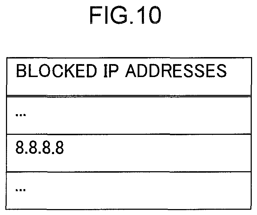

According to the processing described above, steps 190 to 198 are repeated until the determination of step 190 is negative. Accordingly, in a case in which, for example, the tally result information 104 illustrated in Fig. 8 is stored in the tally result table, the determinations of steps 194 and 196 would each be affirmative for the access source having the IP address "8.8.8.8", and the IP address "8.8.8.8" would be registered as an addition to the blacklist (see Fig. 10). After that IP address has been added and registered to the blacklist, access to the public servers 12 from the access source of that IP address is blocked by the communication blocking section 42 of the communication monitoring section 38.

After the processing of step 192 and the subsequent steps has been performed for all of the IP addresses stored in the tally result table, the determination of step 190 is negative, the illicit access source estimation processing (Fig. 9) ends, and the network monitoring processing (Fig. 6) ends.

Second Exemplary Embodiment

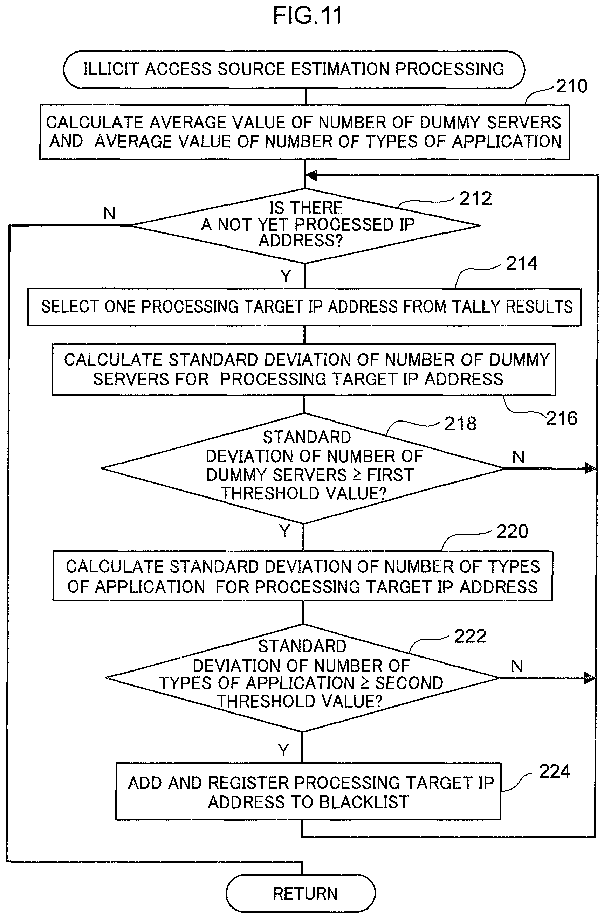

Next, a second exemplary embodiment of technology disclosed herein is described. Note that since configuration of the second exemplary embodiment is the same as that of the first exemplary embodiment, each section is allocated the same reference numeral and description of the configuration is omitted. Illicit access source estimation processing according to the second exemplary embodiment is described with reference to Fig. 11.

At step 210, the illicit access source estimation section 34 calculates an average value of the number of dummy servers and an average value of the number of types of application tallied for each access source, based on the tally result information stored in the tally result table. At step 212, the illicit access source estimation section 34 determines whether or not an IP address for which the processing of next step 214 and the subsequent steps has not yet been executed is present in the tally result information stored in the tally result table. Processing transitions to step 214 in cases in which the determination of step 212 is affirmative.

At step 214, the illicit access source estimation section 34 selects, as a processing target IP address, one IP address for which the processing of step 214 and the subsequent steps has not yet been executed from the tally result information stored in the tally result table.

At step 216, the illicit access source estimation section 34 reads the number of dummy servers 14 stored in the tally result table in association with the processing target IP address selected at step 214. Then, the illicit access source estimation section 34 calculates a standard deviation of the number of dummy servers for the access source of the processing target IP address based on the read number of dummy servers 14 and the average value of the number of dummy servers calculated previously at step 210.

Next, at step 218, the illicit access source estimation section 34 determines whether or not the standard deviation of the number of dummy servers calculated at step 216 is a pre-set first threshold value or greater. In cases in which the determination of step 218 is negative, the scale of illicit access from the access source of the processing target IP address is small and there is a low likelihood of the access source of the processing target IP address being an illicit proxy server managing illicit clients. Accordingly, in cases in which the determination of step 218 is negative, it is estimated that the access source of the processing target IP address presents a low level of risk and processing returns to step 212.

Further, processing transitions to step 220 in cases in which the determination of step 218 is affirmative. At step 220, the illicit access source estimation section 34 reads the number of types of application stored in the tally result table in association with the processing target IP address selected at step 214. The illicit access source estimation section 34 then calculates the standard deviation of the number of types of application for the access source of the processing target IP address based on the read number of types of application and the average value of the number of types of application calculated previously at step 210.

Next, at step 222, the illicit access source estimation section 34 determines whether or not the standard deviation of the number of dummy servers calculated at step 220 is a pre-set second threshold value or greater. In cases in which the determination of step 222 is negative, the scale of illicit access from the access source of the processing target IP address is small and there is a low likelihood of the access source of the processing target IP address being an illicit proxy server managing illicit clients. Accordingly, in cases in which the determination of step 222 is negative, it is estimated that the access source of the processing target IP address presents a low level of risk, and processing returns to step 212.

However, in cases in which the determination of steps 218 and 222 are each affirmative, the access source of the processing target IP address has a number of dummy servers 14 and a number of types of application that are both clearly greater than the average value, and the scale of illicit access from that access source is not considered small. Further, in cases in which the number of types of application is clearly greater than the average value, there is a high likelihood of the access source of the processing target IP address being an illicit proxy server managing plural illicit clients. Accordingly, in cases in which the determination of step 222 is affirmative, it is estimated that the access source of the processing target IP address presents a high level of risk and processing transitions to step 224. At step 224, the blacklist registration section 36 registers the processing target IP address as addition to the blacklist stored in the blacklist storage section 40 of the communication monitoring section 38 and processing returns to step 212.

According to the processing described above, steps 212 to 224 are repeated until the determination of step 212 is negative, and processing target IP addresses for which the determinations of steps 218 and 222 have been each affirmative are registered as additions to the blacklist. Then, access to the public servers 12 from the access sources of the IP addresses registered as additions to the blacklist is blocked by the communication blocking section 42 of the communication monitoring section 38. Further, after the processing of step 214 and the subsequent steps has been performed for all of the IP addresses stored in the tally result table, negative determination is made at step 212 and the illicit access source estimation processing (Fig. 11) ends.

Third Exemplary Embodiment

Next, a third exemplary embodiment of technology disclosed herein is described. Note that sections the same as those of the first exemplary embodiment and the second exemplary embodiment are allocated the same reference numerals and description thereof is omitted.

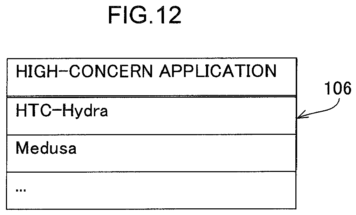

In the third exemplary embodiment, among applications used in illicit access, identifying information of an application that is of particularly great concern from a security perspective is pre-registered in a high-concern applications table as high-concern application information 106, illustrated in Fig. 12 as an example. The high-concern applications table is, for example, stored in the storage section 56 or the like and is referenced by the illicit access source estimation section 34. The content of the high-concern application information 106 registered in the high-concern applications table is preferably updated each time that the existence of a new application of great concern from a security perspective is detected, similarly to virus definition information and the like.

Note that "THC-Hydra" included in the high-concern application information 106 illustrated in Fig. 12 is a brute force attack tool compatible with several protocol types. Further, "Medusa" included in the high-concern application information 106 illustrated in Fig. 12 is a brute force attack tool compatible with several protocol types, and is capable of parallel processing. Other examples of applications that are of great concern from a security perspective include brute force attack tools such as "Ncrack". These are merely examples of applications used to attack networks; there is no limitation to the above examples.

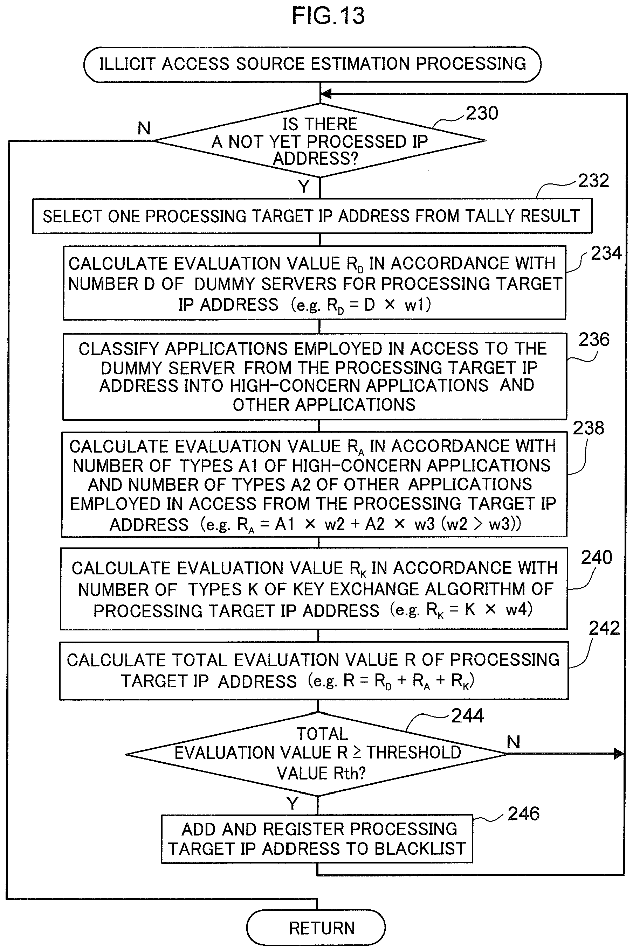

Next, illicit access source estimation processing according to the third exemplary embodiment is described, with reference to Fig. 13. At step 230, the illicit access source estimation section 34 determines whether or not an IP address for which the processing of next step 232 and the subsequent steps has not yet been executed is present in the tally result information stored in the tally result table. Processing transitions to step 232 in cases in which the determination of step 230 is affirmative. At step 232, the illicit access source estimation section 34 selects, as the processing target IP address, one IP address, for which the processing of step 232 and the subsequent steps has not yet been executed, from the tally result information stored in the tally result table.

Next, at step 234, the illicit access source estimation section 34 reads a number D of dummy servers 14 stored in the tally result table in association with the processing target IP address selected at step 232. The illicit access source estimation section 34 then calculates an evaluation value $R_D$ of the access source of the processing target IP address in accordance with the read number D of the dummy servers 14. The evaluation value $R_D$ may, for example, be calculated according to Equation (1) below. Note that w1 in Equation (1) is a weight coefficient for the number D of the dummy servers 14.

$$R_D = D \times w1 \qquad \qquad \ldots (1)$$

Further, at step 236, the illicit access source estimation section 34 reads all of the application identifying information stored as an applications list in the tally result table in association with the processing target IP address selected at step 232. The illicit access source estimation section 34 sequentially checks whether or not items of all of the read application identifying information is registered in the high-concern applications table, and classifies the checked applications according to whether or not they are high-concern applications. The illicit access source estimation section 34 then tallies a type count A1 of high-concern applications and a type count A2 of other applications based on the result of classifying the applications according to whether or not they are high-concern applications.

Next, at step 238, the illicit access source estimation section 34 calculates an evaluation value $R_A$ of the access source of the processing target IP address in accordance with the type counts A1 and A2 of the applications used to make access from the processing target IP address. The evaluation value $R_A$ may, for example, be calculated according to Equation (2) below. Note that in Equation (2), w2 is a weight coefficient for the high-concern application type count A1, w3 is a weight coefficient for the other application type count A2, and w2 > w3.

$$R_A = A1 \times w2 + A2 \times w3 \qquad \qquad \ldots (2)$$

At step 240, the illicit access source estimation section 34 reads a key exchange algorithm type count K stored in the tally result table in association with the processing target IP address selected at step 232. The illicit access source estimation section 34 then calculates an evaluation value $R_K$ of the access source of the processing target IP address in accordance with the read key exchange algorithm type count K. The evaluation value $R_K$ may, for example, be calculated according to Equation (3) below. Note that in Equation (3), w4 is a weight coefficient for the key exchange algorithm type count K.

$$R_K = K \times w4 \qquad \qquad \ldots (3)$$

Note that for the key exchange algorithm information also, there is a high likelihood of there being variation between clients, similarly to the application identifying information. Accordingly, the higher the key exchange algorithm type count K, the higher the likelihood of the access source of the processing target IP address being an illicit proxy server managing plural illicit clients.

Then, at step 242, the illicit access source estimation section 34 calculates a total evaluation value R of the access source of the processing target IP address based on the evaluation values calculated by Equations (1) to (3). The total evaluation value R may, for example, be calculated according to Equation (4) below.

$$R = R_D + R_A + R_K \qquad \qquad \ldots (4)$$

Then, at the next step 244, the illicit access source estimation section 34 determines whether or not the total evaluation value R calculated at step 242 is a threshold value Rth or greater. Note that the threshold value Rth may, for example, be a predetermined value, or, for example, may be a value that changes depending on the average value of the number D of the dummy servers 14, the average value of the application type counts A1 and A2, and the average value of the key exchange algorithm type count K.

As is clear from Equations (1) to (4) described above, the total evaluation value R increases in value as the number D of dummy servers 14 related to the access source of the processing target IP address increases, and increases in value as the application type counts A1 and A2 increase. Further, the proportional increase in the value of the total evaluation value R with an increase in the high-concern application type count A1 is greater than the proportional increase in the value of the total evaluation value R with an increase in the other application type count A2. Furthermore, the value of the total evaluation value R increases as the key exchange algorithm type count K related to the access source of the processing target IP address increases. Accordingly, the total evaluation value R represents the level of risk presented by the access source of the processing target IP address (level of concern in terms of security) and it may be estimated that the access source of the processing target IP address presents a low level of risk in a case in which the determination of step 244 is negative. Therefore, processing returns to step 230 in a case in which the determination of step 244 is negative.

However, in cases in which the determination of step 244 is affirmative, the scale of the illicit access from the access source of the processing target IP address is not considered small and the likelihood of the access source of the processing target IP address being an illicit proxy server managing plural illicit clients is high. Accordingly, in cases in which the determination of step 244 is affirmative, it is estimated that the access source of the processing target IP address presents a high level of risk and processing transitions to step 246. At step 246, the blacklist registration section 36 registers the processing target IP address as an addition to the blacklist stored in the blacklist storage section 40 of the communication monitoring section 38 and processing returns to step 230.

According to the processing described above, steps 230 to 246 are repeated until the determination of step 230 is negative and the processing target IP addresses for which the determination of step 244 has been affirmative are registered as additions to the blacklist. Then, access to the public servers 12 from the access sources of the IP addresses registered as additions to the blacklist is blocked by the communication blocking section 42 of the communication monitoring section 38. In a case in which the processing of step 232 and the subsequent steps has been performed for all of the IP addresses stored in the tally result table, the determination of step 230 is negative and the illicit access source estimation processing (Fig. 13) ends.

In each of the exemplary embodiments described above, plural dummy servers 14 are installed in the monitoring target network formed by the plural public servers 12. Further, the tallying section 28 tallies the number of accessed dummy servers and the number of attribute information types for each access source based on the identifying information and attribute information of the individual access sources that accessed the dummy servers 14, which are included in the history of accesses to each of the plural dummy servers 14. The illicit access source estimation section 34 then estimates the legitimacy of the individual access sources based on the number of dummy servers 14 and the number of attribute information types tallied for each access source. This enables the legitimacy of the access source to be estimated with high precision even in cases in which illicit accesses are mixed in with accesses from the access source.

Further, in each of the exemplary embodiments described above, the attribute information of the access source includes identifying information of applications used to access the dummy servers 14 and the tallying section 28 tallies the number of application types as the number of attribute information types of the access source. The likelihood of the application identifying information varying between clients is high, and therefore the likelihood of the access source of the processing target IP address being an illicit proxy server managing plural illicit clients becomes higher the greater the number of application types. This enables the precision of estimating the legitimacy of access sources to be improved.

Further, in the third exemplary embodiment, identifying information of high-concern applications used in attacking networks is stored in the storage section 56 or the like. Then, the illicit access source estimation section 34 calculates the total evaluation value R such that the total evaluation value R increases more for access sources from which there have been accesses that used a high-concern application than it does for access sources from which no accesses used a high-concern application. This enables access sources from which there has been illicit access using a high-concern application to be evaluated as access sources presenting a higher level of risk, and enables the precision of estimation of the legitimacy of access sources to be further increased.

Further, in the third exemplary embodiment, attribute information of the access source includes information regarding an key exchange algorithm that is usable to access the dummy server 14, reported from the access source, and the tallying section 28 tallies the number of key exchange algorithm types as the number of attribute information types of the access source. The likelihood of the key exchange algorithm information varying between clients is high, and therefore the likelihood of the access source of the processing target IP address being an illicit proxy server managing plural illicit clients becomes higher the greater the number of key exchange algorithm types. This enables the precision of estimation of the legitimacy of the access source to be improved.

In the first exemplary embodiment, the illicit access source estimation section 34 estimates the legitimacy of individual access sources by determining a magnitude relationship between the number of dummy servers 14 and the first threshold value and a magnitude relationship between the number of attribute information types of the access source and the second threshold value, for each individual access source. Further, in the second exemplary embodiment, the illicit access source estimation section 34 estimates the legitimacy of individual access sources by determining the level of divergence from the average value of the number of dummy servers 14 (standard deviation) and the level of divergence from the average value of the number of attribute information types of the access source (standard deviation). This enables simple processing that estimates the legitimacy of individual access sources to be implemented.

Further, in each of the exemplary embodiments above, access to the public servers 12 included in the monitoring target network from access sources estimated not to be legitimate by the illicit access source estimation section 34 is blocked by the communication blocking section 42 of the communication monitoring section 38. This enables security concerns in the monitoring target network to be reduced.

Note that although a mode has been described in which the communication monitoring section 38 cooperates with the first computer 50 to implement the network monitoring device 24, there is no limitation thereto. The first computer 50 may also be caused to function as the communication monitoring section 38.

Note that although a mode has been described in which the network monitoring program 66, which serves as an example of a network monitoring program according to technology disclosed herein, is pre-stored (installed) in the storage section 56, there is no limitation thereto. The network monitoring program according to the present disclosure may, for example, be provided in a format recorded to a recording medium such as a CD-ROM, DVD-ROM, or memory card.

All cited documents, patent applications, and technical standards mentioned in the present specification are incorporated by reference in the present specification to the same extent as if each individual cited document, patent application, or technical standard has been specifically and individually indicated to be incorporated by reference.

**Claims**

1. A network monitoring device (24) comprising:

   a tallying section (28) that is configured to, based on identifying information and attribute information of an access source included in a history of access to a plurality of dummy servers (14) installed in a monitoring target network, the access source having accessed the individual dummy servers (14), tally a number of the dummy servers accessed and a number of types of the attribute information for each access source; and
   an estimation section (34) that is configured to estimate the legitimacy of individual access sources based on the number of dummy servers and the number of attribute information types tallied for each access source by the tallying section (28).

2. The network monitoring device of claim 1, wherein:

   the attribute information includes identifying information of applications used to access the dummy servers; and
   the tallying section (28) is configured to tally the number of types of application as the number of attribute information types.

3. The network monitoring device of claim 2, further comprising a storage section (86) that is configured to store identifying information of a specific application used to attack networks; and
   the estimation section (34) is configured to estimate the legitimacy such that a probability of estimating as legitimate is lower for an access source from which there has been access using the specific application whose identifying information has been stored in the storage section (84) than for an access source from which no access using the specific application.

4. The network monitoring device of claim 1, wherein:

   the attribute information includes information regarding a key exchange algorithm that has been reported from an access source and is usable to access the dummy server; and
   the tallying section (28) is configured to tally a number of types of key exchange algorithm as the number of attribute information types.

5. The network monitoring device of any one of claim 1 to claim 4, wherein the estimation section (34) is configured to estimate the legitimacy of individual access sources by determining for each individual access source either:

   a magnitude relationship between the number of dummy servers and a first threshold value and a magnitude relationship between the number of attribute information types and a second threshold value; or
   a level of divergence from an average value of the number of dummy servers and a level of divergence from an average value of the number of attribute information types.

**6.** The network monitoring device of any one of claim 1 to claim 5, further comprising an access blocking section (42) that is configured to block access from an access source estimated not to be legitimate by the estimation section to a server included in the monitoring target network.

**7.** A network monitoring system comprising:

a plurality of dummy servers (14) installed in a monitoring target network; and
the network monitoring device (24) of any one of claim 1 to claim 6.

**8.** The network monitoring system of claim 7, wherein the plurality of dummy servers (14) are allocated different addresses to one another within a range of addresses allocated to the monitoring target network.

**9.** A network monitoring program that causes a computer to execute processing, the processing comprising:

based on identifying information and attribute information of an access source included in a history of access to a plurality of respective dummy servers (14) installed in a network, the access source having accessed the dummy servers (14), tallying (70) a number of the dummy servers accessed and a number of types of the attribute information for each access source; and
estimating (72) the legitimacy of access sources based on the number of dummy servers and the number of attribute information types tallied for each access source.

**10.** A network monitoring method in which a computer executes processing, the processing comprising:

based on identifying information and attribute information of an access source included in a history of access to a plurality of respective dummy servers (14) installed in a network, the access source having accessed the dummy servers (14), tallying (70) a number of the dummy servers accessed and a number of types of the attribute information for each access source; and
estimating (72) the legitimacy of access sources based on the number of dummy servers and the number of attribute information types tallied for each access source.

**11.** The network monitoring method of claim 10, wherein:

the attribute information includes identifying information of applications used to access the dummy servers; and
the tallying includes tallying the number of types of application as the number of attribute information types.

**12.** The network monitoring method of claim 11, further comprising a storing identifying information of a specific application used to attack networks,
wherein the estimation includes estimating the legitimacy such that a probability of estimating as legitimate is lower for an access source from which there has been access using the specific application whose identifying information has been stored than for an access source from which no access using the specific application.

**13.** The network monitoring method of claim 10, wherein:

the attribute information includes information regarding a key exchange algorithm that has been reported from an access source and is usable to access the dummy server; and
the tallying includes tallying a number of types of key exchange algorithm as the number of attribute information types.

**14.** The network monitoring method of any one of claim 10 to claim 13, wherein the estimation includes estimating the legitimacy of individual access sources by determining for each individual access source either:

a magnitude relationship between the number of dummy servers and a first threshold value and a magnitude relationship between the number of attribute information types and a second threshold value; or
a level of divergence from an average value of the number of dummy servers and a level of divergence from an average value of the number of attribute information types.

**15.** The network monitoring method of any one of claim 10 to claim 14, further comprising blocking (74) access from an access source estimated not to be legitimate by the estimation to a server included in the monitoring target network.

## FIG.1

24

NETWORK MONITORING DEVICE  28  30

| ILLICIT ACCESS SOURCE ESTIMATION SECTION | 34 |

34 — ILLICIT ACCESS SOURCE ESTIMATION SECTION

DUMMY SERVER COUNT TALLYING SECTION

COMMUNICATION HISTORY COLLECTION SECTION

36 — BLACKLIST REGISTRATION SECTION

ATTRIBUTE INFORMATION TYPE COUNT TALLYING SECTION — 32

26

38

40 — BLACKLIST STORAGE SECTION

TALLYING SECTION

SERVER GROUP

42 — COMMUNICATION BLOCKING SECTION

PUBLIC SERVER — 12

COMMUNICATION MONITORING SECTION

PUBLIC SERVER — 12

INTERNET

10

DUMMY SERVER — 14

COMMUNICATION HISTORY RECORDING SECTION — 16

20

COMMUNICATION HISTORY STORAGE REGION — 18

DUMMY SERVER — 14

COMMUNICATION HISTORY RECORDING SECTION — 16

COMMUNICATION HISTORY STORAGE REGION — 18

FIG.2

PUBLIC SERVER 12
PUBLIC SERVER 12

COMMUNICATION MONITORING SECTION 38
BLACKLIST STORAGE SECTION 40
COMMUNICATION BLOCKING SECTION 42

INTERNET 20

FIRST COMPUTER 50
CPU 52
INPUT SECTION 58
DISPLAY SECTION 60
COMMUNICATION SECTION 62
MEMORY 54

STORAGE SECTION 56
NETWORK MONITORING PROGRAM 66
COMMUNICATION HISTORY COLLECTING PROCESS 68
TALLYING PROCESS 70
ILLICIT ACCESS SOURCE ESTIMATION PROCESS 72
BLACKLIST REGISTRATION PROCESS 74

SECOND COMPUTER 80
DISPLAY SECTION 90
INPUT SECTION 88
CPU 82
COMMUNICATION SECTION 92
MEMORY 84
94

STORAGE SECTION 86
COMMUNICATION HISTORY RECORDING PROGRAM 96
COMMUNICATION HISTORY STORAGE REGION 18

SECOND COMPUTER 80

...

# FIG.3

```
  ┌──────────────────────────────────────┐
  │  COMMUNICATION HISTORY RECORDING     │
  │     PROCESSING (DUMMY SERVER)        │
  └──────────────────────────────────────┘
                    │
  ┌──────────────────────────────────────┐
  │   RECORD ACCESS TIME AND ACCESS      │ ~150
  │        SOURCE IP ADDRESS             │
  └──────────────────────────────────────┘
                    │
  ┌──────────────────────────────────────┐
  │  ACQUIRE AND RECORD APPLICATION      │ ~152
  │   INFORMATION OF ACCESS SOURCE       │
  └──────────────────────────────────────┘
                    │
  ┌──────────────────────────────────────┐
  │  ACQUIRE AND RECORD KEY EXCHANGE     │ ~154
  │  ALGORITHM INFORMATION OF ACCESS     │
  │             SOURCE                   │
  └──────────────────────────────────────┘
                    │
              ( E N D )
```

# FIG.4

CLIENT

SERVER

SYN

SYN+ACK

ACK

Protocol Version Exchange

Protocol Version Exchange

Key Exchange Init

Key Exchange Init

## FIG.5

100A

| ACCESS TIMING | ACCESS SOURCE IP ADDRESS | APPLICATION | KEY EXCHANGE ALGORITHM |
|---|---|---|---|
| 2015/12/01 02:01 | 7.7.7.7 | SSH.Net | A |
| 2015/12/01 04:06 | 8.8.8.8 | SCANNING TOOL | B |
| ... | ... | ... | ... |

100B

| ACCESS TIME | ACCESS SOURCE IP ADDRESS | APPLICATION | KEY EXCHANGE ALGORITHM |
|---|---|---|---|
| 2015/12/01 09:18 | 9.9.9.9 | SSH.Net | C |
| 2015/12/01 15:30 | 8.8.8.8 | ATTACK TOOL | B |
| ... | ... | ... | ... |

100C

| ACCESS TIME | ACCESS SOURCE IP ADDRESS | APPLICATION | KEY EXCHANGE ALGORITHM |
|---|---|---|---|
| 2015/12/02 10:21 | 8.8.8.8 | SSH.Net | B |
| ... | ... | ... | ... |

# FIG.6

NETWORK MONITORING PROCESSING
(NETWORK MONITORING DEVICE)

i ← 1 — 160

162

COLLECT, FROM DUMMY SERVER i, COMMUNICATION HISTORY INFORMATION IN WHICH ACCESS TIME IS WITHIN PREDETERMINED RANGE

ADD IDENTIFYING INFORMATION OF DUMMY SERVER i TO COLLECTED COMMUNICATION HISTORY AND STORE — 164

168    N    i = TOTAL NUMBER OF DUMMY SERVERS? — 166

i ← i+1

Y

N    IS THERE A NOT YET PROCESSED IP ADDRESS? — 170

172

Y

FETCH ONE PROCESSING TARGET IP ADDRESS FROM COMMUNICATION HISTORY

RETRIEVE COMMUNICATION HISTORY USING PROCESSING TARGET IP ADDRESS AND EXTRACT ALL DUMMY SERVER IDENTIFYING INFORMATION, APPLICATION INFORMATION, AND KEY EXCHANGE ALGORITHM INFORMATION

TALLY AND RECORD NUMBER OF DUMMY SERVERS ACCESSED FROM PROCESSING TARGET IP ADDRESS    174

TALLY AND RECORD NUMBER OF TYPES OF APPLICATION EMPLOYED IN ACCESS TO DUMMY SERVER FROM PROCESSING TARGET IP ADDRESS    176
178

TALLY AND RECORD NUMBER OF TYPES OF KEY EXCHANGE ALGORITHM REPORTED FROM PROCESSING TARGET IP ADDRESS IN ACCESS TO DUMMY SERVER — 180

ILLICIT ACCESS SOURCE ESTIMATION PROCESSING — 182

END

# FIG.7

102

| DUMMY SERVER | ACCESS TIMING | ACCESS SOURCE IP ADDRESS | APPLICATION | KEY EXCHANGE ALGORITHM |
|---|---|---|---|---|
| DUMMY SERVER 1 | 2015/12/01 02:01 | 7.7.7.7 | SSH.Net | A |
| DUMMY SERVER 2 | 2015/12/01 09:18 | 9.9.9.9 | SSH.Net | C |
| DUMMY SERVER 2 | 2015/12/01 15:30 | 8.8.8.8 | ATTACK TOOL | B |
| DUMMY SERVER 3 | 2015/12/02 10:21 | 8.8.8.8 | SSH.Net | B |
| DUMMY SERVER 1 | 2015/12/01 04:06 | 8.8.8.8 | SCANNING TOOL | B |
| ... | ... | ... | ... | ... |

# FIG.8

104

| ACCESS SOURCE IP ADDRESS | NUMBER OF DUMMY SERVERS | NUMBER OF APPLICATION TYPES | NUMBER OF KEY EXCHANGE ALGORITHM TYPES | APPLICATION LIST |
|---|---|---|---|---|
| 7.7.7.7 | 1 | 1 | 1 | SHH.Net |
| 8.8.8.8 | 3 | 3 | 1 | SHH.Net, ATTACK TOOL, SCANNING TOOL |
| 9.9.9.9 | 1 | 1 | 1 | SHH.Net |
| ... | ... | ... | ... | ... |

## FIG.9

ILLICIT ACCESS SOURCE ESTIMATION PROCESSING

IS THERE
A NOT YET PROCESSED IP
ADDRESS? —190

N

Y

SELECT ONE PROCESSING TARGET IP ADDRESS
FROM TALLY RESULTS —192

194 — NUMBER
OF DUMMY SERVERS>1? — N

Y

196 — NUMBER OF
TYPES OF APPLICATION > 1? — N

Y

198 — ADD AND REGISTER PROCESSING
TARGET IP ADDRESS TO BLACKLIST

RETURN

# FIG.10

| BLOCKED IP ADDRESSES |
| --- |
| ... |
| 8.8.8.8 |
| ... |

# FIG.11

ILLICIT ACCESS SOURCE ESTIMATION PROCESSING — 210

CALCULATE AVERAGE VALUE OF NUMBER OF DUMMY SERVERS AND AVERAGE VALUE OF NUMBER OF TYPES OF APPLICATION

IS THERE A NOT YET PROCESSED IP ADDRESS? — 212

N

Y

SELECT ONE PROCESSING TARGET IP ADDRESS FROM TALLY RESULTS — 214

CALCULATE STANDARD DEVIATION OF NUMBER OF DUMMY SERVERS FOR PROCESSING TARGET IP ADDRESS — 216

STANDARD DEVIATION OF NUMBER OF DUMMY SERVERS ≥ FIRST THRESHOLD VALUE? — 218

N

Y

CALCULATE STANDARD DEVIATION OF NUMBER OF TYPES OF APPLICATION FOR PROCESSING TARGET IP ADDRESS — 220

STANDARD DEVIATION OF NUMBER OF TYPES OF APPLICATION ≥ SECOND THRESHOLD VALUE? — 222

N

Y

ADD AND REGISTER PROCESSING TARGET IP ADDRESS TO BLACKLIST — 224

RETURN

# FIG.12

| HIGH-CONCERN APPLICATION |
|---|
| HTC-Hydra |
| Medusa |
| ... |

106

# FIG.13

```
( ILLICIT ACCESS SOURCE ESTIMATION PROCESSING )
```

IS THERE A NOT YET PROCESSED IP ADDRESS? — 230

N

Y

SELECT ONE PROCESSING TARGET IP ADDRESS FROM TALLY RESULT — 232

CALCULATE EVALUATION VALUE $R_D$ IN ACCORDANCE WITH NUMBER D OF DUMMY SERVERS FOR PROCESSING TARGET IP ADDRESS (e.g. $R_D = D \times w1$) — 234

CLASSIFY APPLICATIONS EMPLOYED IN ACCESS TO THE DUMMY SERVER FROM THE PROCESSING TARGET IP ADDRESS INTO HIGH-CONCERN APPLICATIONS AND OTHER APPLICATIONS — 236

CALCULATE EVALUATION VALUE $R_A$ IN ACCORDANCE WITH NUMBER OF TYPES A1 OF HIGH-CONCERN APPLICATIONS AND NUMBER OF TYPES A2 OF OTHER APPLICATIONS EMPLOYED IN ACCESS FROM THE PROCESSING TARGET IP ADDRESS (e.g. $R_A = A1 \times w2 + A2 \times w3 \ (w2 > w3)$) — 238

CALCULATE EVALUATION VALUE $R_K$ IN ACCORDANCE WITH NUMBER OF TYPES K OF KEY EXCHANGE ALGORITHM OF PROCESSING TARGET IP ADDRESS (e.g. $R_K = K \times w4$) — 240

CALCULATE TOTAL EVALUATION VALUE R OF PROCESSING TARGET IP ADDRESS (e.g. $R = R_D + R_A + R_K$) — 242

TOTAL EVALUATION VALUE R ≥ THRESHOLD VALUE Rth? — 244

N

Y

ADD AND REGISTER PROCESSING TARGET IP ADDRESS TO BLACKLIST — 246

( RETURN )

Europäisches
Patentamt

European
Patent Office

Office européen
des brevets

# EUROPEAN SEARCH REPORT

Application Number

EP 17 19 8858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/317740 A1 (BE ERY TAL ARIEH [IL] ET AL) 23 October 2014 (2014-10-23)<br>* paragraph [0012] *<br>* paragraph [0025] *<br>* paragraph [0076] *<br>* paragraph [0090] - paragraph [0092] *<br>* figures 6,7 *<br>----- | 1-15 | INV.<br>H04L29/06<br><br>ADD.<br>H04L29/08 |
| A | US 2008/244744 A1 (THOMAS SCOTT [AU] ET AL) 2 October 2008 (2008-10-02)<br>* paragraph [0004] - paragraph [0013] *<br>* paragraph [0031] - paragraph [0036] *<br>* claims 1-6 *<br>----- | 1-15 | |
| A | HUSAK MARTIN ET AL: "Network-Based HTTPS Client Identification Using SSL/TLS Fingerprinting",<br>2015 10TH INTERNATIONAL CONFERENCE ON AVAILABILITY, RELIABILITY AND SECURITY, IEEE,<br>24 August 2015 (2015-08-24), pages 389-396, XP032795271,<br>DOI: 10.1109/ARES.2015.35<br>[retrieved on 2015-10-16]<br>* the whole document *<br>----- | 1-15 | |

TECHNICAL FIELDS
SEARCHED    (IPC)

H04L

The present search report has been drawn up for all claims

| Place of search | Date of completion of the search | Examiner |
|---|---|---|
| Munich | 13 March 2018 | Bakdi, Idir |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 19 8858

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2018

| Patent document cited in search report | Publication date | Patent family member(s) | Publication date |
|---|---|---|---|
| US 2014317740 A1 | 23-10-2014 | US 2014317738 A1 <br> US 2014317739 A1 <br> US 2014317740 A1 <br> US 2014317741 A1 <br> US 2015207806 A1 <br> US 2017339165 A1 | 23-10-2014 <br> 23-10-2014 <br> 23-10-2014 <br> 23-10-2014 <br> 23-07-2015 <br> 23-11-2017 |
| US 2008244744 A1 | 02-10-2008 | US 2008244744 A1 <br> US 2012204262 A1 <br> US 2015074809 A1 <br> US 2017251004 A1 | 02-10-2008 <br> 09-08-2012 <br> 12-03-2015 <br> 31-08-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007334536 A